# EUROPÄISCHE PATENTSCHRIFT

(11) **EP 0 870 644 B1**
(45) Veröffentlichungstag und Bekanntmachung des Hinweises auf die Patenterteilung: **03.01.2007**
(21) Anmeldenummer: 98103236.0
(22) Anmeldetag: 25.02.1998
(51) Int. Cl.: B60Q 1/14, B60Q 1/26, B60Q 1/38

(54) **Fahrzeugleuchte**
Vehicle lights
Feux de véhicule

(30) Priorität: 10.04.1997 DE 19714849
(43) Veröffentlichungstag der Anmeldung: 14.10.1998
(73) Patentinhaber: Schefenacker Vision Systems Germany GmbH, 71409 Schwaikheim (DE)
(72) Erfinder: Eberspächer, Helmut, 73732 Esslingen (DE); Gauch, Winfried Hardy, 71106 Magstadt (DE); Haf, Helmut, 71409 Schwaikheim (DE); Robel, Wolfgang, 70794 Filderstadt-Sielmingen (DE)
(74) Vertreter: Jackisch-Kohl, Anna-Katharina

(56) Entgegenhaltungen:
- EP-A- 0 693 397
- EP-A- 0 802 081
- DE-A- 3 040 714
- DE-A- 3 416 164
- DATABASE WPI Section PQ, Week 199546 Derwent Publications Ltd., London, GB; Class Q16, AN 1995-354901 XP002127620 & JP 07 242146 A (YAZAKI CORP), 19. September 1995 (1995-09-19)

## Beschreibung

Die Erfindung betrifft eine Leuchte eines Fahrzeuges nach dem Oberbegriff des Anspruches 1.

Die Leuchtmittel in einer Heckleuchte eines Kraftfahrzeuges, wie ein Brems- oder ein Blinklicht, leuchten bei Tag und bei Nacht mit gleicher Lichtstärke. Fällt helles Sonnenlicht auf die Heckleuchte des Kraftfahrzeuges, sind die Signalleuchten der Heckleuchte mitunter nicht oder nur schwierig erkennbar. Andererseits kann es vorkommen, daß bei Nachfahrt der Fahrer eines nachfolgenden Fahrzeuges durch die Heckleuchten des vorausfahrenden Fahrzeuges geblendet wird.

Bei der gattungsgemäßen Leuchte (XP-00212760 - JP 07 242146) ist das Leuchtmittel an einer Schaltung angeschlossen. Die Lichtstärke dieses Leuchtmittels ist in Abhängigkeit von den äußeren Lichtverhältnissen einstellbar. Die Schaltung hat eine Master-Kontrolleinheit, mit der das Leuchtmittel angesteuert wird. Die Master-Kontrolleinheit hat einen Dimmer, der dafür sorgt, daß die Lichtstärke des Leuchtmittels verringert werden kann. Es besteht keine Möglichkeit, ein Leuchtmittel einer zweiten Leuchte anzusteuern. Jede Leuchte weist eine eigene Schaltung auf. Dadurch ergibt sich ein aufwendiger Aufbau.

Aus der DE-A1-34 16 164 ist es bekannt, dem Fahrer durch Aufleuchten einer gelben Leuchtdiode mitzuteilen, daß das Außenlicht zu dunkel ist und er nunmehr die Beleuchtung des Fahrzeuges einschalten muß. Dann erlischt diese gelbe Leuchtdiode, sofern alle Leuchtmittel des Kraftfahrzeuges einwandfrei arbeiten. Eine automatische Umschaltung der Leuchtstärke des Leuchtmittels in Abhängigkeit von den äußeren Lichtverhältnissen findet bei dieser Leuchte nicht statt.

Die DE-A1-30 40 714 zeigt eine helligkeitsgeregelte Bremsleuchte, bei der die Leuchtstärke des Bremslichtes an die Lichtverhältnisse angepaßt wird. Um dies zu erreichen, wird ein lichtempfindlicher Sensor verwendet, der an ein Steuergerät ein Signal in Abhängigkeit von den jeweiligen Beleuchtungsverhältnissen abgibt. Mit dem Steuergerät wird die Leistung bzw. Helligkeit des Bremslichtes gesteuert.

Der Erfindung liegt die Aufgabe zugrunde, die gattungsgemäße Leuchte so auszubilden, daß ihre Leuchtmittel deutlich erkennbar sind, ohne daß die Gefahr besteht, daß sie den Fahrer eines nachfolgenden Fahrzeuges blenden.

Diese Aufgabe wird bei der gattungsgemäßen Leuchte erfindungsgemäß mit den kennzeichnenden Merkmalen des Anspruches 1 gelöst.

Bei der erfindungsgemäßen Leuchte wird die Lichtstärke des Leuchtmittels in Abhängigkeit von den äußeren Lichtverhältnissen verändert. So kann bei Tagfahrten die Lichtstärke des Leuchtmittels erhöht werden, so daß das Leuchtmittel auch dann sichtbar ist, wenn helles Sonnenlicht auf die Leuchte fällt. Trotz der erhöhten Lichtstärke ist bei Tagfahrten eine Blendung des Fahrers von nachfolgenden Fahrzeugen nicht zu befürchten. Bei einer Nachtfahrt hingegen kann die Lichtstärke des Leuchtmittels verringert werden, ohne daß die Gefahr besteht, daß dieses Leuchtmittel bei Betätigung nicht deutlich sichtbar ist. Andererseits wird durch die verringerte Lichtstärke sichergestellt, daß der Fahrer eines nachfolgenden Fahrzeuges nicht geblendet wird. Der Master-Kontrolleinheit ist die Slave-Kontrolleinheit nachgeschaltet. Mit ihr wird das Leuchtmittel der zweiten Leuchte angesteuert. Die Master-Kontrolleinheit liefert entsprechende Signale an die Slave-Kontrolleinheit, um die Leuchtstärke der Leuchtmittel der anderen Leuchte zu steuern. Durch die Nachschaltung der Slave-Kontrollein-heit wird erreicht, daß die entsprechenden Leuchtmittel der beiden Leuchten gleiche Lichtstärke haben.

Vorteilhaft wird die Lichtstärke des Leuchtmittels dadurch geregelt, daß die Sensorik des elektrochromen Innenspiegels des Fahrzeuges die Lichtstärke einstellt. Durch die Sensorik des elektrochromen Innenspiegels wird ein von hinten herannahendes Fahrzeug, dessen Scheinwerferlicht auf den Innenspiegel fällt, erfaßt. Die von der Sensorik des Innenspiegels ausgesandten Signale werden erfaßt und ausgewertet und dazu herangezogen, die Lichtstärke des Leuchtmittels zu verringern, das vorzugsweise ein Nebelschlußlicht ist. Dadurch ist sichergestellt, daß der Fahrer des nachfolgenden Fahrzeuges durch das Leuchtmittel nicht geblendet wird.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in schematischer Darstellung eine Schalteinrichtung zur Ansteuerung von Leuchtmitteln in einer Heckleuchte eines Kraftfahrzeuges,
- Fig. 2: in schematischer Darstellung und in einem Blockdiagramm einen Teil der Schalteinrichtung gemäß Fig. 1,
- Fig. 3: einen Schaltplan eines EC-Adapters der Schalteinrichtung gemäß Fig. 1,
- Fig. 4: einen Schaltplan der Schalteinrichtung gemäß Fig. 2,
- Fig. 5: in einem Diagramm die Abhängigkeit einer EC-Signalspannung von der anliegenden Spannung und der Zeit.

Das (nicht dargestellte) Fahrzeug hat zwei Heckleuchten 1 und 2, die mit verschiedenen Leuchtmitteln, die Glühlampen, Neonlampen oder auch LEDs sein können, versehen ist. Die rechte und die linke Heckleuchte 1 und 2 haben jeweils ein Bremslicht 3, ein Blinklicht 4, einen Rückstrahler 5, ein Schlußlicht 6 sowie eine Nebelschlußleuchte 7. Die verschiedenen Leuchtmittel 3 bis 7 der rechten Heckleuchte 1 werden durch eine Slave-Kontrolleinheit 8 angesteuert. Sie ist über Kabel 9 an die Stromversorgung des Fahrzeuges angeschlossen. Die Slave-Kontrolleinheit 8 wird von einer Master-Kontrolleinheit 10 angesteuert, die ebenfalls über Kabel 11 an die Stromversorgung des Fahrzeuges angeschlossen ist. Mit der Master-Kontrolleinheit 10 werden die Leuchtmittel 3 bis 7 der Heckleuchte 2 in noch zu beschreibender Weise angesteuert. Mit der Master-Kontrolleinheit werden die Pegel für die Lichtstärke des Bremslichtes 3 und des Blinklichtes 4 und die Blinkfrequenz des Blinklichtes 4 der Heckleuchte 2 gesteuert. Über Steuerleitungen 12 werden von der Master-Kontrolleinheit 10 entsprechende Signale zur Slave-Kontrolleinheit 8 übertragen, um auch die Leuchtstärken des Bremslichtes 3, des Bremslichtes 4 sowie deren Blinkfrequenz der rechten Heckleuchte 1 zu steuern. Dadurch ist gewährleistet, daß die entsprechenden Leuchtmittel der rechten und linken Heckleuchte 1, 2 gleiche Lichtstärke haben.

Die Master-Kontrolleinheit 10 erhält über eine Signalleitung 13 Signale von einem Elektrochromspiegel (EC-Spiegel) 14, der im Fahrzeug als Innenrückblickspiegel vorgesehen ist. Dem EC-Spiegel 14 ist ein Controller zugeordnet, der in Abhängigkeit von auf den Innenrückblickspiegel von nachkommenden Fahrzeugen auffallenden Lichtes über die Signalleitung 13 entsprechende Signale an die Master-Kontrolleinheit 10 sendet. Außerdem ist dem EC-Spiegel 14 eine Schaltung zugeordnet, mit welcher die Nebelschlußleuchte 7 abgeschaltet werden kann.

Im Fahrzeug befindet sich ein Nebelschlußlichtschalter 15, mit dem der Fahrer das Nebelschlußlicht 7 bei Bedarf einschalten kann. Dieser Schalter 15 ist an einen Warnschaltkreis 16 angeschlossen, der ein Signal an eine Anzeige 17 liefert. An den Warnschaltkreis 16 ist außerdem ein Geschwindigkeits-Schaltkreis 18 angeschlossen. Mit ihm wird die Fahrgeschwindigkeit des Fahrzeuges überwacht. Ist die Nebelschlußleuchte 7 eingeschaltet, darf die Fahrgeschwindigkeit des Fahrzeuges nicht höher als 50 km/h sein. Wird diese Geschwindigkeit überschritten, sendet der Schaltkreis 18 ein entsprechendes Signal an den Warnschaltkreis 16, der dann die Anzeige 17 betätigt und damit dem Fahrer anzeigt, daß er die für die eingeschaltete Nebelschlußleuchte 7 zulässige Geschwindigkeit überschritten hat. Die Anzeige 17 ist vorteilhaft ein Lautsprecher, der ein entsprechendes akustisches Signal erzeugt. Als Anzeige 17 kann auch eine optische Anzeige verwendet werden, die auch in Kombination mit einer akustischen Anzeige eingesetzt werden kann.

Die Slave-Kontrolleinheit 8 ist über eine Redundanzleitung 19 mit der Master-Kontrolleinheit 10 verbunden. Die Redundanzleitung 19 gewährleistet, daß für den Fall, daß der Pegel für die Lichtstärke des Blinklichtes in der Master-Kontrolleinheit 10 ausfallen sollte, die Slave-Kontrolleinheit 8 die Steuerung des Blinklichtes 4 der Heckleuchte 2 übernimmt.

Die Nebelschlußleuchte 7 wird automatisch durch die Sensorik des EC-Spiegels 14 abgeschaltet. Trifft auf den EC-Spiegel 14 das Licht eines nachfolgenden Fahrzeuges, dann erzeugt die Sensorik des EC-Spiegels 14 ein entsprechendes Schaltsignal, das über die Signalleitung 13 der Master-Kontrolleinheit 10 zugeführt wird. Sie verarbeitet dieses Signal und schaltet das Nebelschlußlicht 7 ab. Dadurch ist sichergestellt, daß der Fahrer des nachfolgenden Fahrzeuges durch die Nebelschlußleuchte 7 nicht geblendet wird. Sobald das nachfolgende Fahrzeug das vorausfahrende Fahrzeug überholt oder wieder einen größeren Abstand von ihm hat, fällt auf den EC-Spiegel 14 kein oder weniger Licht, so daß die Master-Kontrolleinheit 10 über die Signalleitung 13 ein entsprechendes Signal erhält, das in der Master-Kontrolleinheit 10 so verarbeitet wird, daß mit ihr die Nebelschlußleuchte 7 automatisch wieder eingeschaltet wird. Für diese automatische Abschaltung der Nebelschlußleuchte 7 ist es nicht erforderlich, daß der Fahrer den Nebelschlußlichtschalter 15 im Fahrzeug betätigt.

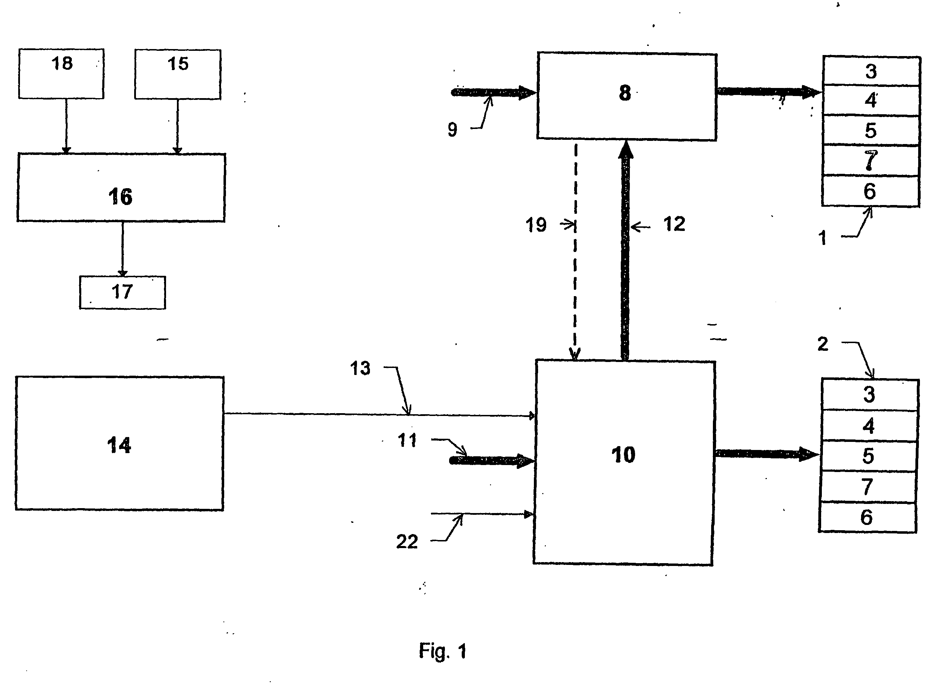

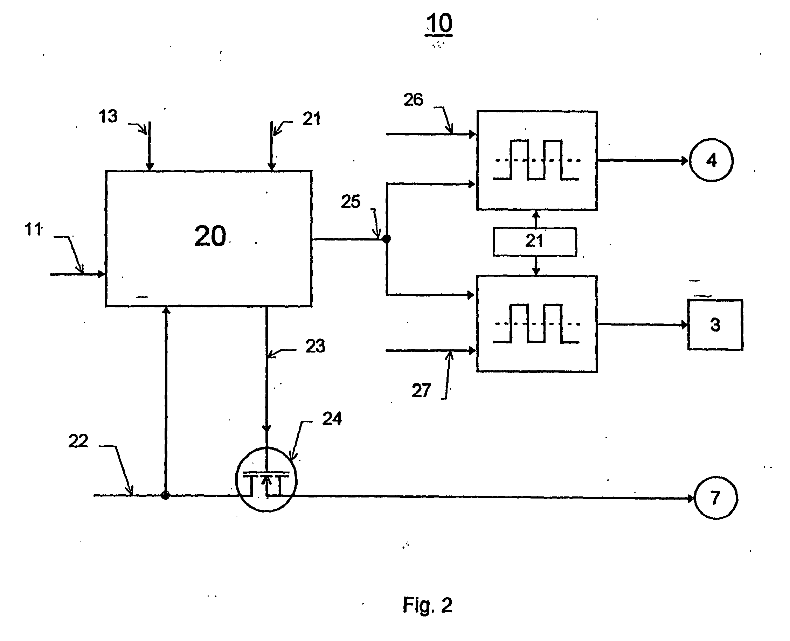

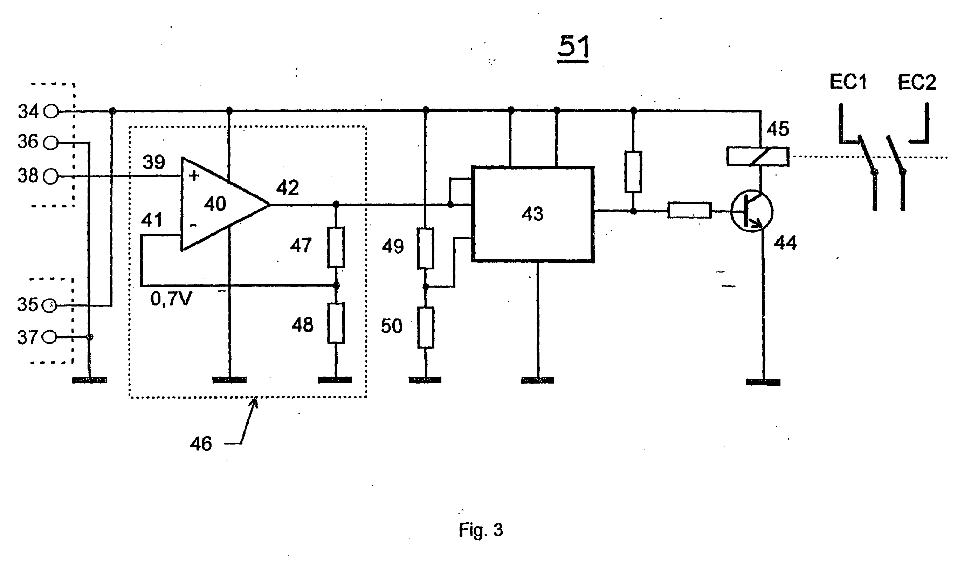

Wie Fig. 2 zeigt, hat die Master-Kontrolleinheit 10 einen Logikbaustein 20, der an einen Leistungsteil 21 des Fahrzeuges angeschlossen ist. Mit ihm wird die Strom/Spannungsversorgung des Logikbausteins 20 sichergestellt. Der Logikbaustein 20 erhält außerdem ein Signal über die Leitung 11, die an den Lichtschalter des Fahrzeuges angeschlossen ist. Außerdem wird dem Logikbaustein über eine Leitung 13 ein ΔEC-Signal eines ΔEC-Schaltkreises im EC-Spiegel 14 zugeführt (Fig. 1). Die Bildung des ΔEC-Signals wird anhand von Fig. 3 noch erläutert werden. Außerdem erhält der Logikbaustein 20 über eine weitere Leitung 22 das Signal vom Schalter der Nebelschlußleuchte 7.

Der Logikbaustein 20 steuert über eine Leitung 23 einen Leistungsschalter 24, mit dem die Nebelschlußleuchte 7 automatisch ein- und ausgeschaltet werden kann. Der Leistungsschalter 24 kann durch ein Relais, durch elektronische Bauteile und dergleichen gebildet sein. Das über die Leitung 22 kommende Signal wird im Logikbaustein 20 ausgewertet. Er sendet über die Leitung 23 ein entsprechendes Signal an den Leistungsschalter. Ist die Nebelschlußleuchte 7 eingeschaltet und nähert sich von hinten ein Fahrzeug, dann fällt, wie zuvor beschrieben, das vom nachfolgenden Fahrzeug ausgesandte Licht auf den EC-Spiegel 14. Seine Sensorik erfaßt dieses auffallende Licht, wertet es aus und sendet über die Leitung 13 ein entsprechendes Signal an den Logikbaustein 20 der Master-Kontrolleinheit 10. Der Logikbaustein 20 betätigt den Leistungsschalter 24 über die Leitung 23 so, daß die Nebelschlußleuchte 7 abgeschaltet wird. Sobald auf den EC-Spiegel 14 kein Licht mehr auftrifft bzw. die auftreffende Lichtstärke ein bestimmtes Maß unterschritten hat, wird dies von der Sensorik des EC-Spiegels 14 erfaßt. Er sendet über die Leitung 13 wiederum ein entsprechendes Signal an den Logikbaustein 20, in dem dieses Signal ausgewertet wird. Der Logikbaustein betätigt den Leistungsschalter 24, so daß die Nebelschlußleuchte 7 automatisch wieder eingeschaltet wird.

Mit dem Logikbaustein 20 wird außerdem das Bremslicht 3 und das Blinklicht 4 in zwei unterschiedlichen Lichtstärken betätigt. Fährt das Fahrzeug bei Tag und ist der Lichtschalter des Fahrzeuges nicht eingeschaltet, dann werden das Bremslicht 3 und das Blinklicht 4 mit einer stärkeren Lichtstärke betrieben (Tagstellung). Fährt das Fahrzeug bei Dunkelheit und ist der Lichtschalter des Fahrzeuges eingeschaltet, reicht eine geringere Leuchtstärke für das Bremslicht 3 und das Blinklicht 4 aus. Über die Leitung 11 wird dem Logikbaustein 20 in Abhängigkeit von der Stellung des Lichtschalters ein entsprechendes Signal zugeführt. Dementsprechend werden die empfangenen Signale vom Logikbaustein 20 ausgewertet. An einem Ausgang 25 steht dann in Abhängigkeit von der Stellung des Lichtschalters ein Low- oder ein High-Signal an. Ein Low-Signal wird beispielsweise dann erzeugt, wenn der Lichtschalter des Fahrzeuges eingeschaltet ist. In diesem Falle reicht es aus, das Bremslicht 3 und das Blinklicht 4 mit einer geringeren Lichtstärke zu betreiben. Ist der Lichtschalter hingegen nicht eingeschaltet, dann steht am Ausgang 25 des Logikbausteins 20 beispielsweise ein High-Signal an, wodurch das Bremslicht 3 und das Blinklicht 4 mit höherer Lichtstärke betrieben werden. Somit ist eine automatische Anpassung der Lichtstärke an Tag- und an Nachtfahrt möglich. Wie Fig. 2 zeigt, kann für das Blinklicht 4 eine Glühlampe verwendet werden, während für das Bremslicht 3 als Leuchtmittel LEDs eingesetzt werden können. Selbstverständlich ist es auch möglich, für das Bremslicht 3 mindestens eine Glühlampe einzusetzen oder für das Blinklicht alternativ LEDs zu verwenden oder gar eine Minderung von beiden anzuwenden.

Die Höhe des Low- und High-Signales kann vorteilhaft fahrzeugspezifisch eingestellt werden. Entsprechende Stellsignale 26 und 27 sind zu diesem Zweck vorgesehen.

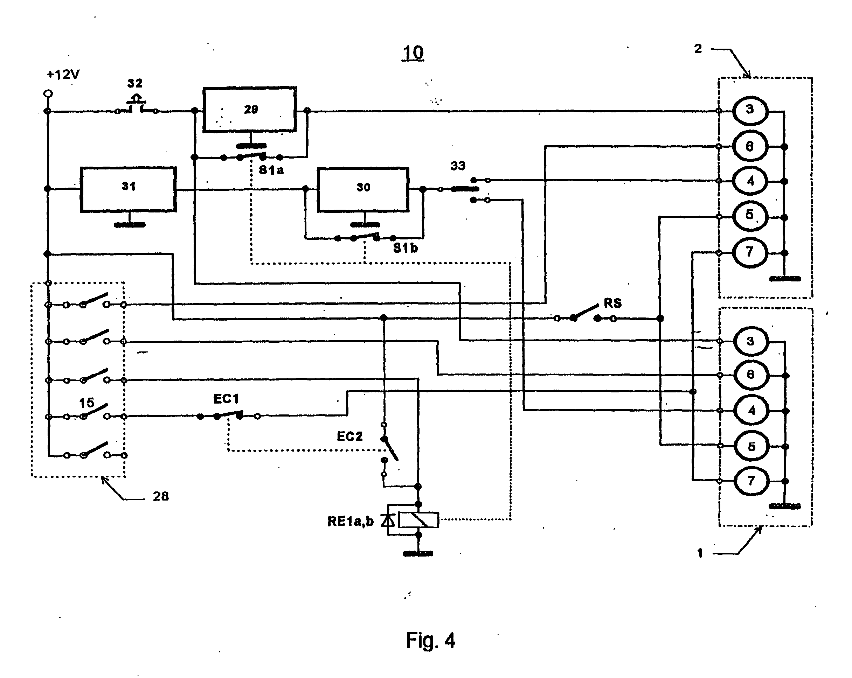

Die beschriebene Regelung der einzelnen Leuchtmittelfunktionen erfolgt vorteilhaft über eine Pulsweitenmodulation (Fig. 4) oder über eine verteilte Stromregelung oder über eine Summenstromregelung. Fig. 4 zeigt die Zweipegelschaltung der Master-Kontrolleinheit 10, mit der die Leuchtmittel der beiden Heckleuchten 1 und 2 in der beschriebenen Weise betätigt werden. Das Bremslicht 3 der beiden Heckleuchten 1, 2 wird vorzugsweise durch LEDs gebildet, während das Schlußlicht 6, das Blinklicht 4, der Rückstrahler 5 und die Nebelschlußleuchte 7 der beiden Heckleuchten 1, 2 durch Glühlampen gebildet sind. Die beiden Heckleuchten 1, 2 werden durch einen Schalter 28 als Lichtschalter betätigt, der im dargestellten Ausführungsbeispiel ein Drehschalter ist. Für das Bremslicht 3 und den Blinker 4 ist jeweils ein in Pulsweitenmodulation arbeitender Dimmer 29 und 30 vorgesehen, der in der Leitungsverbindung von Schaltern 32, 33 zu den Leuchtmitteln 3 und 4 liegt. Für das Blinklicht 4 ist die Master-Kontrolleinheit mit einem Blinkgeber 31 versehen.

Parallel zu den Dimmern 29, 30 liegt jeweils ein Schalter S1a, S1b. Sind diese Schalter geschlossen, wird der jeweilige Dimmer 29, 30 überbrückt. An den Schalter 28 ist über einen Schalter EC1 die Nebelschlußleuchte 7 angeschlossen. Ist der Schalter EC1 geöffnet, ist die Nebelschlußleuchte 7 abgeschaltet. In der Leitungsverbindung vor der Bordspannungsversorgung zum Dimmer 29 liegt ein Schalter 32, der mit der Bremse des Fahrzeuges gekoppelt ist. Wird die Bremse betätigt, schließt der Schalter 32, so daß das Bremslicht 3 aufleuchten kann.

Fährt das Fahrzeug bei Tag, ist der Lichtschalter 28 ausgeschaltet. In diesem Falle sind die Schalter S1a, S2a geschlossen, so daß die Dimmer 29, 30 überbrückt sind. Wird daher die Bremse oder der Blinker des Fahrzeuges betätigt, leuchten das Bremslicht 3 und das Blinklicht 4 mit hoher Lichtstärke. Fährt das Fahrzeug bei Nacht, wird mit dem Schalter 28 die Kraftfahrzeugbeleuchtung eingeschaltet.
Dies hat zur Folge, daß die beiden Schalter S1a, S1b geöffnet werden. Über die Dimmer 29, 30 werden dann das Bremslicht 3 und das Blinklicht 4 mit einer geringeren Spannung bzw. einem geringeren Strom versorgt, so daß sie in einer geringeren Lichtstärke aufleuchten. Die Regelung der einzelnen Lampenfunktionen erfolgt hierbei in den Dimmern 29, 30 mittels einer Pulsweitenmodulation.

Die Schalter EC1 und EC2 werden von der Sensorik des EC-Spiegels 14 geschaltet. Der Schalter EC1 liegt zwischen dem Schalter 28 und der Nebelschlußleuchte 7 in Reihe. Ist die Nebelschlußleuchte 7 über den Schalter 28 eingeschaltet, dann wird die Nebelschlußleuchte 7 in der beschriebenen Weise automatisch ausgeschaltet, wenn sich dem Fahrzeug von hinten ein beleuchtetes Fahrzeug nähert. Das von ihm ausgesandte Licht gelangt auf den EC-Spiegel 14, der die empfangenen Lichtsignale des nachfolgenden Fahrzeuges in der beschriebenen Weise auswertet. Durch ein entsprechendes Schaltsignal wird der Schalter EC1 geöffnet und damit die Nebelschlußleuchte 7 ausgeschaltet.

Fig. 3 zeigt einen EC-Adapter 51, der Bestandteil der Sensorik des EC-Spiegels 14 ist und mit dem durch Differentiation die Nebelschlußleuchte 7 automatisch abgeschaltet wird. Der Schaltkreis des EC-Adapters 51 ist an die Strom/Spannungsversorgung des Fahrzeuges angeschlossen. An den Anschlüssen 34, 35 liegt beispielsweise eine Spannung von 13,5 V an. Die Anschlüsse 36, 37 liegen auf Masse. Über einen Anschluß 38 erhält der EC-Adapter 51 ein Signal des EC-Spiegels 14 bzw. von dessen Sensorik. Dieses EC-Signal wird einem Eingang 39 eines Vergleichers 40 zugeführt. Er vergleicht dieses Signal mit einem an seinem weiteren Eingang 41 anstehenden Vergleichssignal. Am Ausgang 42 des Vergleichers 40 steht das Differenzsignal an, das einer Kippstufe 43 zugeführt wird. Ihm ist ein Transistor 44 nachgeschaltet, mit dem ein Relais 45 zum Betätigen der Schalter EC1 und EC2 betätigt werden kann. Der Eingang 41 des Vergleichers 40 ist Teil einer Vergleicherschaltung 46, welche in Reihe geschaltete Widerstände 47 und 48 bzw. 49 und 50 aufweist. Die Widerstände 47, 48 sind parallel zu den Widerständen 49, 50 geschaltet. Die Widerstandswerte werden so gewählt, daß am Eingang 41 zwei unterschiedliche Spannungswerte anliegen, die im Ausführungsbeispiel beispielsweise 0,3 V und 0,7 V betragen. Die Kippstufe 43 ist so ausgelegt, daß sie ab einer Spannung von im Ausführungsbeispiel 0,7 V ein Signal abgibt. In einem Spannungsbereich zwischen 0,3 V und 0,7 V hält die Kippstufe 43 das Signal, während sie bei einem Spannungswert von kleiner als 0,3 V kein Signal abgibt. Dementsprechend wird durch den nachgeschalteten Transistor 44 das Relais 45 zum Betätigen der Schalter EC1 bzw. EC2 geschaltet. Die angegebenen Spannungswerte können selbstverständlich auch andere Werte haben. Diese beiden Spannungswerte kennzeichnen die beiden unterschiedlichen Schaltschwellen, bei denen das Bremslicht 3 und das Blinklicht 4 zwischen Hell- und Dunkelbetrieb umgeschaltet werden, so daß sie in zwei unterschiedlichen Lichtstärken leuchten. Über diese Differentiation werden das Bremslicht 3 und das Blinklicht 4 mit der erforderlichen Spannung versorgt, so daß sie je nach Umgebungsverhältnissen in unterschiedlichen Stärken leuchten. Bei Tagesfahrt leuchten das Bremslicht 3 und das Blinklicht 4 mit höherer Lichtstärke als bei Nachtfahrt.

Der Schalter EC2 tritt beispielsweise dann in Funktion, wenn das Fahrzeug in einen Tunnel fährt und von hinten durch ein nachfolgendes Fahrzeug beleuchtet wird. In diesem Fall erhält der EC-Spiegel von hinten mehr Licht als von vorn, so daß über den Anschluß 38 ein entsprechendes EC-Signal im Eingang 39 des Vergleichers 40 zugeführt wird. Der EC-Adapter 51 schließt den Schalter EC2, wodurch das nachgeschaltete Relais RE1a, b (Fig. 4) angezogen und die Schalter S1a, S1b geöffnet werden. Dadurch werden die Dimmer 29, 30 in den Stromweg zum Bremslicht 3 und zum Blinklicht 4 geschaltet, so daß sichergestellt ist, daß sie mit einer verringerten Leuchtstärke strahlen. Dadurch wird eine Blendung nachfolgender Fahrzeuge durch zu intensiv leuchtende Brems- und Blinklichter zuverlässig verhindert. Sobald das Tunnel verlassen wird, wird dies von der Sensorik des EC-Spiegels 14 aufgrund eines intensiven Lichteinfalles von vorn bemerkt. Am Eingang 39 des Vergleichers 40 steht ein dementsprechendes Signal an, das im EC-Adapter 51 verarbeitet und zum Öffnen des Schalters EC2 herangezogen wird. Dadurch fällt das Relais RE1a, 1b ab, wodurch die Schalter S1a, S1b wieder geschlossen werden. Die beiden Dimmer 29, 30 werden somit wieder überbrückt, so daß das Bremslicht 3 und das Blinklicht 4 wieder mit einer höheren Lichtstärke aufleuchten.

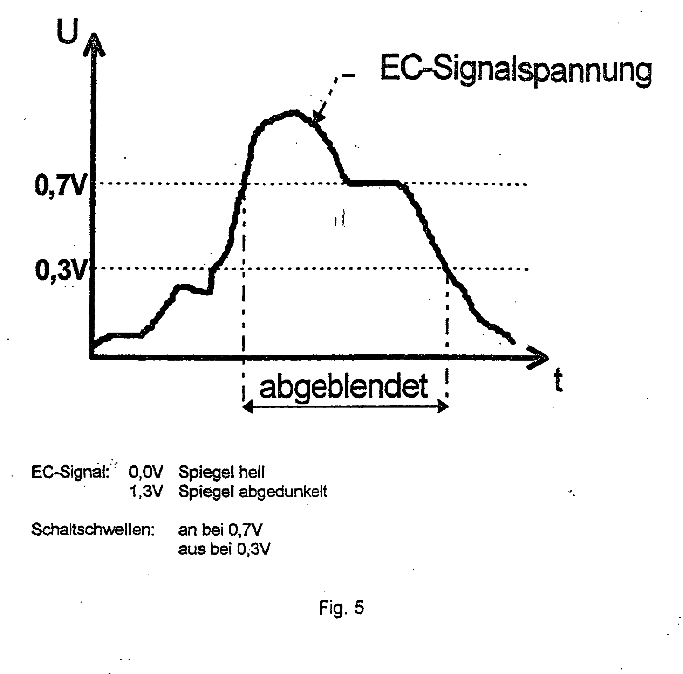

Fig. 5 zeigt beispielhaft den Verlauf der EC-Signalspannung in Abhängigkeit von der Zeit t. Die beiden Spannungspegel von 0,3 V und 0,7 V kennzeichnen das Low- und das High-Signal. Solange die EC-Signalspannung einen Spannungswert unterhalb von 0,3 V hat, ist die Nebelschlußleuchte 7 eingeschaltet. Dieser Fall tritt, wie schon dargelegt, im Normalbetrieb auf, wenn kein Fahrzeug nachfolgt. Sobald sich jedoch von hinten ein Fahrzeug nähert und dessen Scheinwerferlicht auf den EC-Spiegel 14 des vorausfahrenden Fahrzeuges auftritt, nimmt die EC-Signalspannung zu. Sobald sie einen Wert von mehr als 0,7 V aufweist, wird in der beschriebenen Weise die Nebelschlußleuchte 7 automatisch abgeschaltet, so daß das nachfolgende Fahrzeug durch die Nebelschlußleuchte nicht geblendet wird. Die Nebelschlußleuchte 7 bleibt so lange ausgeschaltet, bis der Wert der EC-Signalspannung wieder unter 0,3 V absinkt. Erst dann wird in der beschriebenen Weise die Nebelschlußleuchte 7 automatisch wieder eingeschaltet.

Die Master- und die Slave-Kontrolleinheit 10, 8 können mit sogenannten Fail-Safe-Schaltkreisen versehen sein. Sollte eine Störung in der Schaltung oder gar ein Ausfall auftreten, wird die Schaltung auf den Low-Pegel geschaltet, so daß das Bremslicht 3 und das Rücklicht 4 mit verringerter Leuchtstärke aufleuchten. Dadurch ist auf jeden Fall gewährleistet, daß die Fahrer nachfolgender Fahrzeuge durch diese Lichter nicht geblendet werden. Über einen weiteren Sensor im EC-Spiegel 14 ist eine Automatisierung des Lichtschalters (Tag/Nacht) zuverlässig gewährleistet. Anstelle der beschriebenen Pulsweitenmodulation kann die Regelung der einzelnen Lampenfunktionen auch über eine Widerstandsschaltung, über einen Summenstromregler oder insbesondere auch über verteilte Stromregler erfolgen.

## Patentansprüche

1. Leuchte eines Fahrzeuges, mit wenigstens einem Leuchtmittel (3, 4, 7), das an eine Schaltung (10) angeschlossen und in Abhängigkeit von den äußeren Lichtverhältnissen in seiner Lichtstärke einstellbar ist, wobei die Schaltung wenigstens einen Dimmer (29, 30) aufweist, mit dem die Lichtstärke des Leuchtmittels (3, 4, 7) verringerbar ist, und wobei die Schaltung (10) eine Master-Kontrolleinheit (10) ist,
**dadurch gekennzeichnet, daß** der Master-Kontrolleinheit (10) eine Slave-Kontrolleinheit (8) nachgeschaltet ist, mit der wenigstens ein Leuchtmittel (3, 4) einer zweiten Leuchte (1, 2) ansteuerbar ist.

2. Leuchte nach Anspruch 1,
**dadurch gekennzeichnet, daß** die Lichtstärke des Leuchtmittels (3, 4, 7) in Abhängigkeit von der Stellung eines Lichtschalters (28) des Fahrzeuges einstellbar ist.

3. Leuchte nach Anspruch 1 oder 2,
**dadurch gekennzeichnet, daß** der Dimmer (29, 30) zur Erhöhung der Lichtstärke des Leuchtmittels (3, 4) überbrückbar ist.

4. Leuchte nach Anspruch 3,
**dadurch gekennzeichnet, daß** zum Dimmer (29, 30) ein Schalter (S1a, S1b) parallel geschaltet ist, der in der Leitungsverbindung von einem weiteren Schalter (32, 33) zum Leuchtmittel (3, 4) liegt.

5. Leuchte nach einem der Ansprüche 1 bis 4,
**dadurch gekennzeichnet, daß** das Leuchtmittel ein Bremslicht (3) ist.

6. Leuchte nach einem der Ansprüche 1 bis 4,
**dadurch gekennzeichnet, daß** das Leuchtmittel ein Blinklicht (4) ist.

7. Leuchte nach Anspruch 5 oder 6,
**dadurch gekennzeichnet, daß** das Bremslicht (3) und/oder das Blinklicht (4) durch LEDs gebildet ist.

8. Leuchte nach einem der Ansprüche 1 bis 7,
**dadurch gekennzeichnet, daß** das Leuchtmittel (3, 4, 7) mit einer Sensorik eines elektrochromen Innenspiegels (14) des Fahrzeuges verbunden ist, die die Lichtstärke des Leuchtmittels (3, 4, 7) bei Herannahen eines nachfolgenden Fahrzeuges zumindest verringert.

9. Leuchte nach Anspruch 8,
**dadurch gekennzeichnet, daß** das Leuchtmittel (7) ein Nebelschlußlicht ist.

10. Leuchte nach Anspruch 9,
**dadurch gekennzeichnet, daß** die Sensorik des elektrochromen Innenspiegels (14) die Lichtstärke des Nebenschlußlichtes (7) bei Herannahen des nachfolgenden Fahrzeuges abschaltet.

11. Leuchte nach einem der Ansprüche 8 bis 10,
**dadurch gekennzeichnet, daß** die Sensorik des EC-Spiegels (14) an eine Vergleicherschaltung (46) angeschlossen ist, die den vom EC-Spiegel (14) kommenden Istwert mit einem Referenzwert vergleicht

12. Leuchte nach Anspruch 11,
**dadurch gekennzeichnet, daß** die Vergleicherschaltung (46) einen Vergleicher (14) aufweist, dessen Ausgangssignal zur Steuerung des Nebelschlußlichtes (7) herangezogen wird.

13. Leuchte nach Anspruch 12,
**dadurch gekennzeichnet, daß** dem Vergleicher (40) eine Kippstufe (43) nachgeschaltet ist, die in Abhängigkeit vom Ausgangssignal des Vergleichers (40) das Nebelschlußlicht (7) ein- oder ausschaltet

14. Leuchte nach Anspruch 13,
**dadurch gekennzeichnet, daß** mit der Kippstufe (43) wenigstens ein Schalter (EC1) zum Ein- oder Ausschalten des Nebelschlußlichtes (7) betätigbar ist.

## Claims

1. Vehicle lamp assembly having at least one luminous means (3, 4, 7) which is connected to a circuit (10) and whose luminous intensity can be set as a function of the ambient lighting conditions, the circuit having at least one dimmer (29, 30) with the aid of which the luminous intensity of the luminous means (3, 4, 7) can be reduced, and the circuit (10) being a master control unit (10), **characterized in that** there is connected downstream of the master control unit (10) a slave control unit (8) with the aid of which at least one luminous means (3, 4) of a second lamp assembly (1, 2) can be driven.

2. Lamp assembly according to Claim 1, **characterized in that** the luminous intensity of the luminous means (3, 4, 7) can be set as a function of the position of a light switch (28) of the vehicle.

3. Lamp assembly according to Claim 1 or 2, **characterized in that** the dimmer (29, 30) can be shortcircuited in order to raise the luminous intensity of the luminous means (3, 4).

4. Lamp assembly according to Claim 3, **characterized in that** connected in parallel with the dimmer (29, 30) is a switch (S1a, S1b) which is situated in the line link from a further switch (32, 33) to the luminous means (3, 4).

5. Lamp assembly according to one of Claims 1 to 4, **characterized in that** the luminous means is a brake light (3).

6. Lamp assembly according to one of Claims 1 to 4, **characterized in that** the luminous means is a flasher light (4).

7. Lamp assembly according to Claim 5 or 6, **characterized in that** the brake light (3) and/or the flasher light (4) are/is formed by LEDs.

8. Lamp assembly according to one of Claims 1 to 7, **characterized in that** the luminous means (3, 4, 7) is connected to a sensor system of an electrochromic inside mirror (14) of the vehicle, which at least reduces the luminous intensity of the luminous means (3, 4, 7) upon approach by a following vehicle.

9. Lamp assembly according to Claim 8, **characterized in that** the luminous means (7) is a rear fog light.

10. Lamp assembly according to Claim 9, **characterized in that** the sensor system of the electrochromic inside mirror (14) shuts off the luminous intensity of the rear fog light (7) upon approach by the following vehicle.

11. Lamp assembly according to one of Claims 8 to 10, **characterized in that** the sensor system of the EC mirror (14) is connected to a comparator circuit (46) which compares the actual value coming from the EC mirror (14) with a reference value.

12. Lamp assembly according to Claim 11, **characterized in that** the comparator circuit (46) has a comparator (40) whose output signal is used to control the rear fog light (7).

13. Lamp assembly according to Claim 12, **characterized in that** connected downstream of the comparator (40) is a trigger circuit (43) which switches the rear fog light (7) on or off as a function of the output signal of the comparator (40).

14. Lamp assembly according to Claim 13, **characterized in that** the trigger circuit (43) can be used to actuate at least one switch (EC1) in order to switch the rear fog light (7) on or off.

## Revendications

1. Feu d'un véhicule, avec au moins un moyen lumineux (3, 4, 7) qui est relié à un circuit (10) et dont l'intensité lumineuse est réglable en fonction des conditions de luminosité extérieures, dans lequel le circuit comprend au moins un variateur (29, 30), avec lequel l'intensité lumineuse du moyen lumineux (3, 4, 7) peut être réduite, et dans lequel le circuit (10) est une unité de contrôle maître (10), **caractérisé en ce que** l'unité de contrôle maître (10) est suivie d'une unité de contrôle esclave (8), avec laquelle au moins un moyen lumineux (3, 4, 7) d'un deuxième feu (1, 2) peut être commandé.

2. Feu selon la revendication 1, **caractérisé en ce que** l'intensité lumineuse du moyen lumineux (3, 4, 7) est réglable en fonction de la position d'un commutateur des phares (28) du véhicule.

3. Feu selon la revendication 1 ou 2, **caractérisé en ce que** le variateur (29, 30) peut être court-circuité pour augmenter l'intensité lumineuse du moyen lumineux (3, 4).

4. Feu selon la revendication 3, **caractérisé en ce qu'**un interrupteur (S1a, S1b) est monté en parallèle sur le variateur (29, 30), et est situé dans la ligne de raccordement d'un autre interrupteur (32, 33) vers le moyen lumineux (3, 4).

5. Feu selon l'une quelconque des revendications 1 à 4, **caractérisé en ce que** le moyen lumineux est un feu stop (3).

6. Feu selon l'une quelconque des revendications 1 à 4, **caractérisé en ce que** le moyen lumineux est un feu clignotant (4).

7. Feu selon la revendication 5 ou 6, **caractérisé en ce que** le feu stop (3) et/ou le feu clignotant (4) est formé par des LED.

8. Feu selon l'une quelconque des revendications 1 à 7, **caractérisé en ce que** le moyen lumineux (3, 4, 7) est relié à un détecteur d'un miroir intérieur électrochrome (14) du véhicule, lequel détecteur réduit au moins l'intensité lumineuse du moyen lumineux (3, 4, 7) lors de l'approche d'un véhicule suivant.

9. Feu selon la revendication 8, **caractérisé en ce que** le moyen lumineux (7) est un feu antibrouillard arrière.

10. Feu selon la revendication 9, **caractérisé en ce que** le détecteur du miroir intérieur électrochrome (14) coupe l'intensité lumineuse du feu antibrouillard arrière (7) lors de l'approche du véhicule suivant.

11. Feu selon l'une quelconque des revendications 8 à 10, **caractérisé en ce que** le détecteur du miroir EC (14) est relié à un circuit de comparaison (46), qui compare la valeur réelle provenant du miroir EC (14) avec une valeur de référence.

12. Feu selon la revendication 11, **caractérisé en ce que** le circuit de comparaison (46) comprend un comparateur (14), dont le signal de sortie est utilisé pour la commande du feu antibrouillard arrière (7).

13. Feu selon la revendication 12, **caractérisé en ce que** le comparateur (40) est suivi d'un étage de bascule (43), qui allume ou éteint le feu antibrouillard arrière (7) en fonction du signal de sortie du comparateur (40).

14. Feu selon la revendication 13, **caractérisé en ce qu'**au moins un interrupteur (EC1) peut être actionné avec l'étage de bascule (43) pour allumer ou éteindre le feu antibrouillard arrière (7).
